# FASCICULE DE BREVET EUROPEEN

(11) **EP 1 939 832 B1**
(45) Date de publication et mention de la délivrance du brevet: **09.02.2011**
(21) Numéro de dépôt: 07150149.8
(22) Date de dépôt: 19.12.2007
(51) Int. Cl.: G08C 17/02, E04F 10/00, G01P 13/00, E06B 9/56

(54) **Capteur-émetteur de sécurité pour la détection de vent dans une installation domotique**
Sicherheitssensor und -sender zum Detektieren von Wind in einer Hausanlage
Safety sensor-transmitter for detecting wind in a home-automation system

(30) Priorité: 26.12.2006 FR 0611370
(43) Date de publication de la demande: 02.07.2008
(73) Titulaire: Somfy SAS, 74300 Cluses (FR)
(72) Inventeur: Guillemot, Eric, André, Georges, 74950 Scionzier (FR); Grehant, Bernard, 74300 Nancy-sur-Cluses (FR)
(74) Mandataire: Bugnion Genève

(56) Documents cités:
- EP-A- 1 122 378
- EP-A- 1 586 964
- FR-A1- 2 811 431
- FR-A1- 2 828 319

## Description

L'invention se rapporte à un capteur-émetteur de sécurité disposé sur une structure mobile motorisée dans une installation domotique, en particulier un store motorisé, à un procédé d'inhibition et à un procédé d'apprentissage d'un tel capteur-émetteur. Le capteur-émetteur comprend un émetteur sans fil de manière à transmettre un signal de sécurité.

Il est connu d'utiliser des capteurs de vibration, comprenant par exemple un accéléromètre, pour détecter les mouvements provoqués par le vent sur une telle structure mobile. Le capteur est fixé contre la structure mobile, en un endroit où les effets du vent sont particulièrement marqués. Il comprend également un dispositif d'analyse des signaux issus de l'accéléromètre, et un émetteur radio pour envoyer à une unité de commande d'un moteur un ordre de repli du store quand le niveau de vibrations dépasse un seuil prédéterminé.

On connaît par exemple un tel dispositif de la demande FR 2 811 431.

Le capteur est autonome en énergie, alimenté par une pile ou par une batterie et un panneau de type photovoltaïque.

Un double problème posé par ce type de capteur est celui de l'affectation de seuils de réglage (pour ajuster le niveau de sensibilité du capteur) et du remplacement de la pile.

En effet, il est important que le capteur comprenne un boîtier parfaitement étanche, car la structure mobile, sensible aux effets du vent, est également soumise aux intempéries, humidité ou brouillards salins.

La pile et/ou le moyen de réglage du seuil ou des seuils ne sont accessibles qu'après démontage du boîtier, ce qui implique le plus souvent de désolidariser le capteur de la structure.

Or les mouvements provoqués par ces opérations peuvent entraîner l'émission d'un signal de détection de vent, provoquant automatiquement le repli de la structure mobile. Par son caractère inattendu, ce mouvement automatique peut être particulièrement dangereux si le capteur est disposé sur la barre de charge d'un store de terrasse, et que l'usager, ou l'installateur a déployé le store pour accéder plus facilement à la barre de charge à l'aide d'un escabeau.

Par ailleurs, l'ajustement d'un potentiomètre de réglage sera malaisé si celui-ci est dans un boîtier fermé. Inversement, le fait de rendre la commande du potentiomètre accessible depuis l'extérieur renchérit considérablement le coût, du fait de la contrainte d'étanchéité.

On retrouve la même problématique pour un capteur de sécurité (détection d'obstacle) disposé dans une lame finale de volet roulant motorisé ou sur la partie basse d'une porte motorisée de garage, dont on souhaite régler la sensibilité de détection dans une position au moins partiellement fermée du volet ou de la porte.

Il est connu de la demande de brevet EP 1 598 518 d'activer un tel capteur de détection d'obstacle, disposé en extrémité de lame finale, au passage d'un aimant disposé dans la coulisse latérale du volet.

Il est connu de la demande de brevet WO 99/36886 de faire en sorte qu'un transpondeur destiné au télé-péage automobile et contenu dans un boîtier mobile devienne totalement incapable de fonctionner sans un signal de communication provenant d'un dispositif de sécurité logé dans le support, collé sur le pare-brise, et rendu inactif en cas de tentative de destruction du joint de colle. De plus, le dispositif de sécurité et la partie mobile sont appairés, de sorte que la partie mobile ne peut fonctionner sur une autre voiture qui comporterait également un support de même type.

Il est connu de la demande EP 1 415 290 qu'une télécommande passe d'un fonctionnement manuel à un fonctionnement automatique dans une installation domotique, selon qu'elle est ou non placée sur son support.

Il est enfin connu du brevet US 7,123,144 de sécuriser un système de contrôle automatique de porte par émission d'un signal vers un récepteur si le boîtier émetteur est ouvert ou déplacé (col.6 lignes 13-18). On retrouve une fonction analogue dans les systèmes d'alarme antivol, pour lesquels les capteurs-émetteurs sont logés dans des boîtiers qui émettent automatiquement un signal d'alerte vers la centrale d'alarme en cas d'arrachement ou d'ouverture. La demande de brevet JP 05054269 décrit un tel fonctionnement.

Le but de l'invention est de fournir un capteur-émetteur obviant aux inconvénients cités précédemment et améliorant les capteurs-émetteurs connus de l'art antérieur. En particulier, l'invention propose un capteur-émetteur de structure simple et facilitant et rendant moins dangereuses les opérations de réglage, notamment les opérations de réglage de seuils d'émission. L'invention concerne encore un procédé de fonctionnement d'un tel capteur-émetteur.

Le capteur-émetteur selon l'invention est défini par la revendication 1.

Différents modes de réalisation du capteur-émetteur sont définis par les revendications 2 et 3

L'installation domotique selon l'invention est définie par la revendication 4.

Différents modes de réalisation de l'installation sont définis par les revendications 5 et 6.

Le procédé de fonctionnement d'un capteur-émetteur selon l'invention est défini par la revendication 7.

Différents modes d'exécution du procédé de fonctionnement sont définis par les revendications 8 à 11.

Le dessin annexé représente, à titre d'exemple, un mode de réalisation d'un capteur-émetteur selon l'invention, un mode d'exécution d'un procédé d'apprentissage d'un capteur-émetteur selon l'invention et un mode de fonctionnement d'un capteur-émetteur selon l'invention.
La figure 1 est un schéma d'une installation comprenant un capteur-émetteur selon l'invention.
La figure 2 est un schéma éclaté d'un capteur-émetteur selon l'invention.
La figure 3 est un schéma électrique d'un capteur-émetteur selon l'invention.
La figure 4 est un ordinogramme représentant un mode d'exécution d'un procédé de fonctionnement d'un capteur-émetteur selon l'invention.
La figure 5 est un ordinogramme représentant un mode d'exécution d'un procédé d'apprentissage d'un capteur-émetteur selon l'invention.

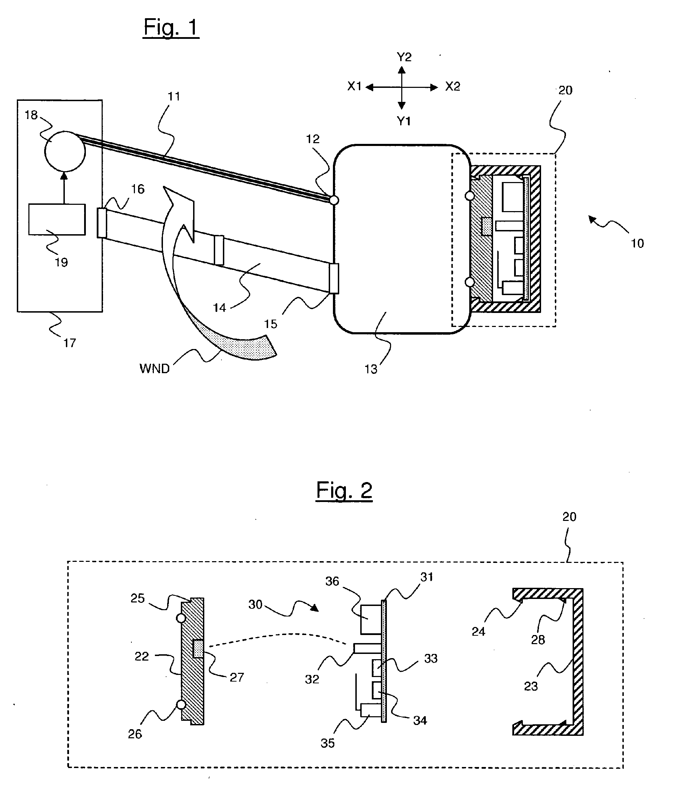

La figure 1 représente une installation 10 comprenant un store de terrasse motorisé dont la toile 11 est accrochée par une fixation 12 à une barre de charge 13. La toile s'enroule sur un tube motorisé 18. Quand le moteur enroule la toile sur le tube d'enroulement, celle-ci provoque le mouvement de la barre de charge 13 dans la direction X1 et, dans une moindre mesure, dans la direction Y2. Une pluralité de bras articulés 14, munis de ressorts, permettent d'exercer un effort sur la barre de charge 13 dans la direction X2 et, dans une moindre mesure, dans la direction Y1 de manière à maintenir la toile tendue. Le bras articulé 14 est raccordé à la barre de charge par une première articulation 15. Le bras articulé comprend d'autres articulations, en particulier une deuxième articulation 16 le raccordant à la structure fixe 17 de l'installation, qui comprend le tube d'enroulement motorisé. Barre de charge, toile et bras articulés constituent la structure mobile.

L'installation 10 comprend également un capteur-émetteur 20, fixé sur la barre de charge 13. Le capteur-émetteur 20 pourrait être situé en tout emplacement tel que le vent (représenté par une flèche pleine WND), agissant sur la toile 11 provoque des mouvements de la structure mobile, en particulier de l'emplacement où est situé le capteur-émetteur. Le capteur-émetteur 20 émet un signal de sécurité vers une unité de commande 19. Cette unité de commande génère les ordres de commande du tube motorisé. Elle comprend un récepteur radiofréquences muni d'une antenne, et éventuellement un capteur de type météorologique.

La figure 2 détaille les éléments compris dans le capteur-émetteur 20. Dans le mode de réalisation préféré, le capteur-émetteur comprend un socle 22 fixé sur la structure mobile, et une partie amovible 23 formant couvercle et comprenant les composants électroniques du capteur-émetteur.

Le couvercle 23 comprend des clips 24 permettant un accrochage rapide du couvercle 23 au socle 22 dans des évidements 25. Le socle est fixé rigidement à la barre de charge 13 par des moyens de fixation 26 représentés par des cercles. Il peut s'agir simplement de vis de serrage. Le socle comprend enfin un élément primaire 27 de détection de fermeture du boîtier, par exemple un aimant, une pastille réfléchissante ou un ergot susceptible d'agir sur un interrupteur. Le socle et le couvercle forment le boîtier du capteur-émetteur.

Le capteur-émetteur 20 comprend également un circuit électronique 30. Les composants sont montés sur un circuit imprimé 31, fixé au couvercle 23 par des ergots de fixation 28. Ces composants comprennent un élément secondaire 32 de détection de fermeture du boîtier, par exemple un interrupteur à lame souple (ILS ou Reed) commandé par un aimant, un optocoupleur ou un simple interrupteur. L'élément secondaire coopère avec l'élément primaire, comme représenté par une ligne courbe pointillée, pour délivrer un état électrique représentatif de l'état de fermeture du boîtier.

Le circuit imprimé supporte également un capteur de vibration 33, par exemple un accéléromètre ou un détecteur inertiel à bille et contact, ou tout dispositif de détection de mouvement.

Une unité logique de traitement 34, par exemple un microcontrôleur, un émetteur radio 35 et son antenne, une pile 36 sont également implantés sur le circuit imprimé 31 du capteur-émetteur.

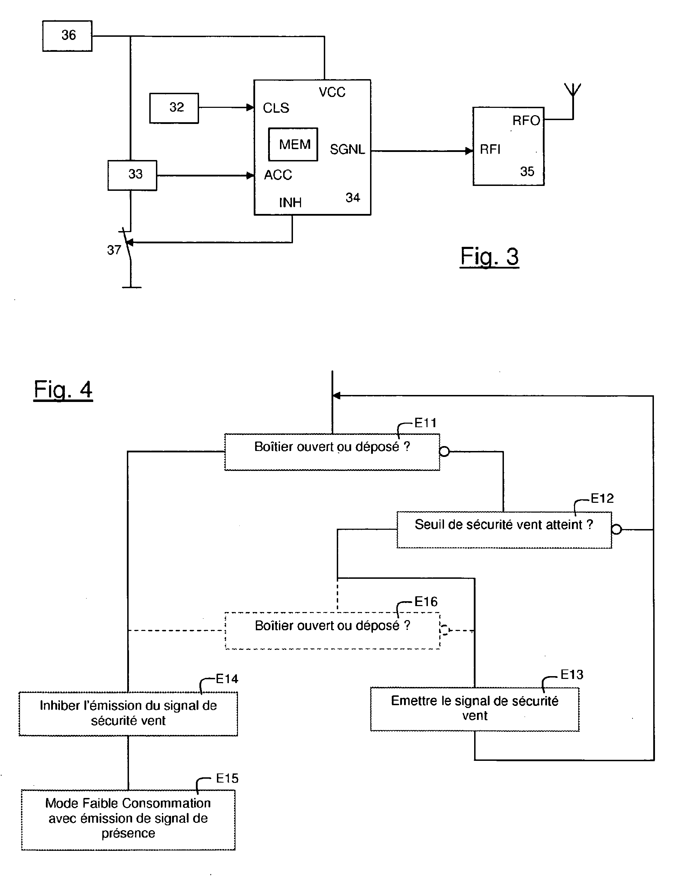

Les liaisons entre ces éléments sont précisées par la figure 3.

L'unité logique de traitement 34 est alimentée par la pile 36, de même que le capteur de vibration 33 si un interrupteur commandé 37 est fermé. Les signaux issus du capteur de vibration 33 sont transmis à une première entrée ACC de l'unité logique de traitement. L'élément secondaire 32 de fermeture du boîtier a sa sortie raccordée à une deuxième entrée CLS de l'unité logique de traitement. Cette entrée est à l'état logique bas tant que le boîtier est fermé. Dans ce cas, les signaux issus du capteur de vibration sont traités, et, s'ils dépassent un ou plusieurs seuil(s) prédéterminés, alors un signal de commande est transmis depuis une première sortie SGNL de l'unité logique de traitement vers une entrée RFI de l'émetteur radio 35, dont une sortie RFO alimente une antenne radiofréquences, et qui émet alors un signal de sécurité « vent ».

Alternativement, les éléments primaire et secondaire détectent non pas l'ouverture du boîtier mais sa fixation à un emplacement prédéterminé de la structure mobile. Par exemple, un aimant sert d'élément primaire et est disposé en un point de la structure mobile, tandis qu'un capteur Reed sert d'élément secondaire. L'élément primaire peut aussi être constitué par une simple pièce ferromagnétique en forme de U disposée sur la structure mobile, tandis que l'aimant et le capteur Reed sont placés dans le boîtier. Quand le boîtier est placé au voisinage de la pièce ferromagnétique, celle-ci canalise le flux magnétique de l'aimant et le renvoie vers le capteur Reed.

Afin de permettre l'interchangeabilité des boîtiers en cas de besoin de remplacement d'un élément défectueux, tout élément primaire est susceptible de coopérer avec tout élément secondaire quand il s'agit d'éléments de même type.

Si l'entrée logique CLS passe à l'état haut, alors l'unité logique de traitement ne tient plus compte du signal issu du capteur de vibration. Dans le mode de réalisation représenté sur la figure 3, un interrupteur à ouverture commandée 37 est piloté par une sortie d'inhibition INH de l'unité logique de traitement 34, ce qui a pour effet de supprimer l'alimentation du capteur de vibration 33, et donc tout signal issu de ce dernier. Alternativement, l'unité logique de traitement 34 peut simplement mettre fin à l'analyse des signaux présents sur son entrée ACC, ou encore bloquer temporairement l'envoi d'une commande d'émission de signal vers l'émetteur radio 35, ou enfin supprimer temporairement l'alimentation de l'émetteur radio 35 par un moyen semblable à l'interrupteur commandé 37, ou en utilisant le même interrupteur commandé 37 pour couper l'alimentation du capteur de vibration et de l'émetteur radio.

La figure 4 représente un mode d'exécution du procédé de fonctionnement selon l'invention, sous forme d'un ordinogramme.

Dans une première étape E11, on teste si le boîtier est ouvert ou déposé. Si tel n'est pas le cas, on passe à une deuxième étape E12, dans laquelle on teste si le seuil de sécurité vent est atteint, c'est-à-dire si les signaux issus du capteur de vibration dépassent un seuil prédéterminé. Si le seuil n'est pas atteint, on boucle sur la première étape E11. Une mise en sommeil de 1 à 2 secondes peut avantageusement être intercalée avant le retour à la première étape E11.

Si le seuil de sécurité est atteint ou dépassé, on passe à une troisième étape E13 dans laquelle le capteur-émetteur émet un signal de sécurité, ou alternativement un signal de commande de repli du store. Le procédé boucle alors sur la première étape E11. L'ensemble des trois premières étapes constitue le mode de surveillance. On dit alors que le capteur émetteur est dans un état opérationnel.

S'il est détecté dans la première étape E11 que le boîtier est ouvert et/ou déposé, on passe à une quatrième étape E14 dans laquelle on inhibe le capteur-émetteur ou plus exactement son émission de signaux de sécurité vent ou de commande de repli du store. Ainsi, le capteur-émetteur ne transmettra pas d'information radio sur la présence de vent, même si le capteur-émetteur subit des mouvements importants. L'inhibition du signal de sécurité vent est provoquée par exemple par une coupure d'alimentation du capteur de vibration. Comme noté plus haut, d'autres moyens simples peuvent provoquer l'inhibition. On dit alors que le capteur-émetteur est dans un état inhibé.

Dans l'état inhibé, certaines fonctionnalités d'émission restent activables.

Dans une étape suivante E15, le capteur-émetteur passe en mode de faible consommation. Ce mode faible consommation comprend un réveil régulier, par exemple toutes les 15 minutes, avec émission d'un signal de présence. En effet, pour assurer une plus grande sécurité, l'unité de commande 19 provoque automatiquement le repli du store si elle constate une anomalie dans le fonctionnement du capteur-émetteur 20, par exemple la non-réception d'un signal de présence. Il ne faut pas que l'ouverture du boîtier capteur-émetteur conduise à ce repli, aussi bien du fait des mouvements du capteur-émetteur provoqués par son ouverture ou sa dépose que du fait d'une cessation de l'émission de ce signal de présence.

En variante, l'étape E13 comprend l'émission d'un signal spécifique adressé à l'unité de commande 19 pour lui signaler une intervention sur le capteur-émetteur. L'unité de commande supprime alors l'écoute du signal de présence. Le capteur-émetteur peut donc supprimer les émissions d'un signal de présence dans le mode de faible consommation, pourvu qu'il y ait émission d'un signal spécifique.

L'ouverture du boîtier et/ou sa dépose peuvent être détectées par un changement d'état de la deuxième entrée CLS de l'unité logique de traitement. Ce changement d'état provoque par exemple une interruption du microcontrôleur inclus dans l'unité logique de traitement.

L'insertion d'une sixième étape E16, représentée par un bloc en trait pointillé, et répétant l'étape E11 après qu'il ait été détecté que le seuil de sécurité est atteint permet d'éviter un repli intempestif du store. En effet, dès que l'utilisateur ou l'installateur commence à manipuler le capteur-émetteur pour le déposer ou pour ouvrir son boîtier, il existe un risque que celui-ci détecte des vibrations qui seraient interprétées comme dues à la présence de vent et qui provoqueraient l'émission d'un signal de commande de repli. La sixième étape E16 est avantageusement précédée d'un retard T0, par exemple de durée une seconde, de manière à éviter un tel risque.

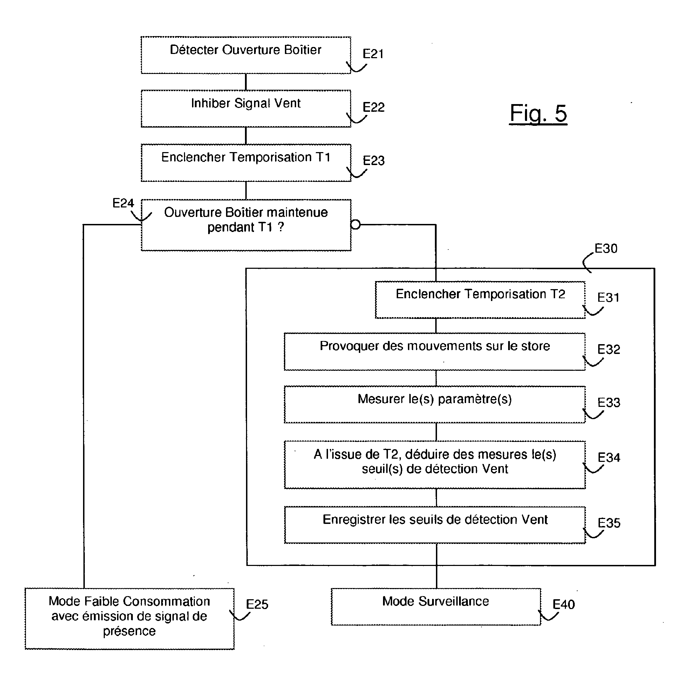

La figure 5 décrit un procédé d'apprentissage selon l'invention.

La première étape E21 du procédé d'apprentissage est similaire à l'étape E12 du procédé de fonctionnement.

La deuxième étape E22 du procédé d'apprentissage est similaire à l'étape E14 du procédé de fonctionnement.

Dans une troisième étape E23, une première temporisation T1 est enclenchée. Cette temporisation présente une faible durée, par exemple comprise entre 2 et 10 secondes.

Dans une quatrième étape E24, il est testé si la dépose et/ou l'ouverture du boîtier, détectée dans la première étape E21, est maintenue pendant la durée de la première temporisation. Si oui, le procédé passe à une cinquième étape E25 de mise en mode faible consommation. Cette étape est identique à l'étape E15 précédemment décrite.

Par contre, si le boîtier a été remis en place pendant la durée de la première temporisation, alors le procédé passe à l'étape de réglage E30.

Un installateur qui souhaite procéder au réglage des seuils de sensibilité du capteur-émetteur doit donc exécuter une opération très simple : retirer le boîtier capteur-émetteur de son support, et le remettre en place au bout de quelques secondes. Cette opération est réalisée alors que le store est déployé, au moins partiellement.

L'entrée dans l'étape de réglage peut être confirmée à l'installateur par un signal sensoriel : par exemple un bip sonore émis par le capteur-émetteur, ou, préférentiellement par l'unité de commande 19 après que celle-ci eût reçu un message radio du capteur-émetteur l'informant de l'entrée en étape de réglage.

Outre cette sous-étape préliminaire de signalisation, non représentée, l'étape de réglage comprend cinq sous-étapes.

Dans une première sous-étape E31, une deuxième temporisation T2 est enclenchée. Cette temporisation présente une durée plus importante que la précédente, par exemple comprise entre 30 secondes et 3 minutes.

Pendant cette durée, l'installateur provoque manuellement une agitation du store représentative des effets du vent, ce qui constitue une deuxième sous-étape E32. Par construction, un store est capable de supporter des rafales de vent assez violentes, mais l'agitation de la structure donne une perception inquiétante à l'utilisateur. Il est donc souhaitable que l'installateur donne au store un mouvement d'agitation correspondant à ce qui paraît inquiétant à l'utilisateur, et non à ce que pourrait véritablement supporter le store.

Dans une troisième sous-étape E33, les paramètres vibratoires captés par le capteur de vibration sont mesurés et enregistrés. Cette sous-étape a lieu pendant toute la durée de la deuxième temporisation.

A l'issue de la deuxième temporisation T2, on passe à une quatrième sous-étape E34, dans laquelle le seuil de détection de vent, ou les seuils de détection de vent, sont déterminés en fonction des mesures effectuées et en fonction d'algorithmes ou de règles empiriques.

Par exemple un seuil est déterminé à partir de la valeur la plus forte mesurée, ou à partir de la moyenne des dix plus fortes valeurs. Ou encore un premier seuil est déterminé pour une fréquence d'oscillations élevée (ou pour un régime impulsionnel), alors qu'un deuxième seuil est déterminé pour une fréquence d'oscillations basse.

Une fois le seuil calculé, ou les seuils calculés, on passe à la cinquième sous-étape E35, dans laquelle le seuil est enregistré, ou les seuils sont enregistrés, dans une mémoire non volatile MEM contenue dans l'unité logique de traitement 34.

L'étape de réglage est donc terminée. Une sous-étape facultative de signalisation, non représentée, peut signaler à l'installateur la fin du réglage.

Le procédé passe alors à l'exécution d'un mode de surveillance, représenté par la dernière étape E40 : le capteur-émetteur étant réglé, il est opérationnel.

Ainsi donc, la même détection d'ouverture d'un boîtier d'un capteur-émetteur conçu selon les enseignements de l'invention permet dans un cas la simple inhibition des signaux de détection vent générés par ce capteur-émetteur, et, dans un autre cas, un mode de réglage extrêmement simple de l'installation.

L'inhibition de la prise en compte des signaux de détection vent (ou de tout signal de sécurité) peut prendre plusieurs formes. Dans le cas le plus simple, cette inhibition se traduit par une interdiction d'émettre le signal de sécurité. Alternativement, l'émission du signal de sécurité n'est pas interdite mais un deuxième signal est émis, indiquant l'état inhibé du capteur, dès que le capteur passe dans l'état inhibé. L'unité de commande 19 est alors informée qu'elle ne doit plus tenir compte du signal de sécurité, devenu non valide. Le deuxième signal est un signal d'invalidation.

Quand le capteur passe de nouveau dans l'état opérationnel, un troisième signal est émis pour indiquer que le signal de sécurité est de nouveau valide.

L'invention a été décrite dans le cas où le boîtier du capteur-émetteur comprend un socle et un couvercle, le circuit électronique étant solidaire du couvercle. Dans un autre mode de réalisation, le circuit électronique est disposé sur le socle, tandis que l'aimant est disposé sur le couvercle.

L'invention s'applique aussi si le boîtier comprenant le capteur reste complètement fermé, ce qui est d'autant plus intéressant pour en garantir l'étanchéité. Actuellement une pile servant d'alimentation au capteur dure plus de dix ans, ce qui autorise une telle structure hermétiquement fermée.

Dans ce cas, c'est le fait de retirer le boîtier de son emplacement de fixation sur la structure mobile qui est détecté.

Dans la description précédente, le boîtier du capteur-émetteur peut occuper quatre états mécaniques :
- fermé et posé,
- ouvert et posé,
- fermé et déposé, et
- ouvert et déposé.

A ces quatre états, correspondent deux états du capteur-émetteur :
- opérationnel (quand l'état mécanique du boîtier est fermé et posé), et
- inhibé (quand l'état mécanique du boîtier est ouvert et posé ou fermé et déposé ou ouvert et déposé).

Cependant, on peut imaginer d'autres états mécaniques du boîtier, d'autres états du capteur-émetteur ainsi que d'autres relations de correspondance entre les états mécaniques du boîtier et les états du capteur-émetteur sans toutefois sortir du cadre de l'invention.

## Revendications

1. Capteur-émetteur (20) destiné à être fixé sur une structure mobile (11, 13, 14) et à émettre un signal de sécurité dans une installation domotique (10), comprenant dans un boîtier (22, 23) : une source d'énergie autonome (36), un capteur de vibration (33), un émetteur sans fil (35) et une unité logique de traitement (34) analysant les signaux issus du capteur de vibration pour décider de l'émission du signal de sécurité par l'émetteur sans fil, **caractérisé en ce qu'**il comprend des moyens (27, 32) de détection de l'état mécanique du boîtier, le capteur-émetteur étant :
- dans un état opérationnel quand le boîtier est fermé et fixé à la structure mobile, l'émission d'un signal de sécurité étant autorisée dans cet état opérationnel, et
- dans un état inhibé dans le cas contraire,
• l'émission d'un signal de sécurité étant interdite dans cet état inhibé, tandis que l'émission d'autres signaux reste possible, ou
• l'émission d'un signal de sécurité étant autorisée dans cet état inhibé, le signal de sécurité étant invalidé par un signal d'invalidation.

2. Capteur-émetteur selon la revendication précédente, **caractérisé en ce que** le signal d'invalidation comprend une information indiquant l'état inhibé du capteur.

3. Capteur-émetteur selon la revendication 1 ou 2, **caractérisé en ce que** les autres signaux comprennent un signal de présence.

4. Installation domotique (10) comprenant une structure mobile (11, 13, 14) et une structure fixe (17) comprenant une unité de commande (19) munie d'un récepteur sans fil, et activant un moteur (18) lors de la réception d'un signal de sécurité, **caractérisée en ce qu'**elle comprend un capteur-émetteur (20) selon l'une des revendications 1 à 3 monté sur la structure mobile.

5. Installation domotique (10) comprenant une structure mobile (11, 13, 14) et une structure fixe (17) comprenant une unité de commande (19) munie d'un récepteur sans fil, et activant un moteur (18) lors de la réception d'un signal de sécurité valide, **caractérisée en ce qu'**elle comprend un capteur-émetteur (20) selon l'une des revendications 1 à 3 monté sur la structure mobile.

6. Installation domotique selon la revendication 4 ou 5, **caractérisée en ce que** la structure mobile comprend un store motorisé, un volet roulant motorisé ou une porte motorisée.

7. Procédé de fonctionnement d'un capteur-émetteur selon l'une des revendications 1 à 3, **caractérisé en ce qu'**il comprend une étape dans laquelle on surveille l'état mécanique du boîtier, le capteur-émetteur étant positionné dans un état opérationnel ou dans un état inhibé en fonction de l'état mécanique du boîtier.

8. Procédé de fonctionnement selon la revendication 7, **caractérisé en ce que** dans l'état inhibé le capteur-émetteur émet périodiquement un signal de présence.

9. Procédé de fonctionnement selon l'une des revendications 7 à 8, **caractérisé en ce que** le capteur-émetteur déclenche une procédure de réglage s'il est demeuré dans un état inhibé pendant une durée inférieure à une première durée prédéterminée.

10. Procédé de fonctionnement selon la revendication précédente, **caractérisé en ce que** la procédure de réglage comprend :
- une étape d'agitation manuelle de la structure mobile,
- une étape de mesure à l'aide du capteur de vibration et
- une étape d'enregistrement des mesures,
puis :
- une étape de calcul d'au moins une valeur de seuil à partir des mesures enregistrées, et
- une étape d'enregistrement de la valeur de seuil.

11. Procédé de fonctionnement selon la revendication précédente, **caractérisé en ce que** le capteur-émetteur passe dans l'état opérationnel à l'issue de la procédure de réglage.

## Claims

1. Sensor-transmitter (20) intended for being fastened on a movable structure (11, 13, 14) and for transmitting a safety signal in a home automation installation (10) that contains within a housing (22, 23): an autonomous energy source (36), a vibration sensor (33), a wireless transmitter (35) and a logic processing unit (34) which analyses the signals coming from the vibration sensor for deciding upon the transmission of the safety signal by the wireless transmitter, **characterised in that** it includes means (27, 32) for detecting the mechanical state of the housing, the sensor-transmitter being
- in an operational state when the housing is closed and fastened to the movable structure, the transmission of a safety signal being authorised in this operational state, and
- in an inhibited state when in any other condition,
• the transmission of a safety signal being prohibited in this inhibited state whereas the transmission of other signal remains possible, or
• the transmission of a safety signal being allowed in this inhibited state, the safety signal being invalidated by an invalidation signal.

2. Sensor-transmitter according to the preceding claim, **characterised in that** the invalidation signal includes an information indicating the inhibited state of the sensor.

3. Sensor-transmitter according to claim 1 or 2, **characterised in that** the other signals contain a presence signal.

4. Home automation installation (10), including a movable structure (11, 13, 14) and a fixed structure (17) comprising a control unit (19) equipped with a wireless receiver, and activating a motor (18) on receipt of a safety signal, **characterised in that** it includes a sensor-transmitter (20) according to one of claims 1 to 3, disposed on the movable structure.

5. Home automation installation (10), including a movable structure (11, 13, 14) and a fixed structure (17) containing a control unit (19) equipped with a wireless receiver, and activating a motor (18) on receipt of a valid safety signal, **characterised in that** it includes a sensor-transmitter (20) according to one of claims 1 to 3, disposed on the movable structure.

6. Home automation installation according to claim 4 or 5, **characterised in that** the movable structure comprises a motorised roller shutter, a motorised awning, or a motorised door.

7. Operating method of a sensor-transmitter according to any one of claims 1 to 3, **characterised in that** it comprises a step of monitoring the mechanical state of the housing, wherein the sensor-transmitter is placed into an operational state or an inhibited state in response to the mechanical state of the housing.

8. Operating method according to claim 7, **characterised in that** the sensor-transmitter transmits periodically a presence signal when being in its inhibiting state.

9. Operating method according to one of claims 7 and 8, **characterised in that** the sensor-transmitter triggers an adjusting procedure if it has stayed in an inhibiting state during a time period shorter than a first predetermined duration.

10. Operating method according to the preceding claim, **characterised in that** the adjusting procedure comprises:
- a step of manual shaking the movable structure,
- a step of measuring with the vibration sensor,
- a step of recording the measures,
then:
- a step of calculating at least one threshold value from the recorded measures, and
- a step of recording the threshold value.

11. Operating method according to the preceding claim, **characterised in that** the sensor-transmitter switches into the operational state at the end of the adjusting procedure.

## Patentansprüche

1. Funkfühler (20) zur Befestigung auf einer mobilen Struktur (11, 13, 14) und zur Ausgabe eines Sicherheitssignals in einer haustechnischen Anlage (10), mit folgenden Teilen in einem Gehäuse (22, 23): einer autonomen Energiequelle (36), einem Vibrationsfühler (33), einem drahtlosen Sender (35) und einer Verarbeitungslogik (34) zur Analyse der vom Vibrationsfühler abgegebenen Signale zwecks Entscheidung über das Absenden eines Sicherheitssignals durch den drahtlosen Sender, **dadurch gekennzeichnet, dass** der Funkfühler Mittel (27, 32) zum Abfühlen des mechanischen Zustandes des Gehäuses aufweist, wobei der Funkfühler
- sich in einem Betriebszustand befindet, wenn das Gehäuse geschlossen und an der mobilen Struktur befestigt ist, und wobei das Senden eines Sicherheitssignals in diesem Betriebszustand zulässig ist, und
- sich im gegenteiligen Fall in einem Sperrzustand befindet, wobei
• das Senden eines Sicherheitssignals in diesem Sperrzustand blockiert ist, während das Senden anderer Signale möglich ist, oder
• das Senden eines Sicherheitssignals in diesem Sperrzustand möglich ist, dieses Signal aber durch ein Annullierungssignal annulliert wird.

2. Funkfühler nach vorstehendem Anspruch, **dadurch gekennzeichnet, dass** das Annullierungssignal eine Information enthält, welche den Sperrzustand des Fühlers anzeigt.

3. Funkfühler nach Anspruch 1 oder 2, **dadurch gekennzeichnet, dass** die anderen Signale ein Anwesenheitssignal enthalten.

4. Haustechnische Anlage (10), mit einer mobilen Struktur (11, 13, 14) und einer ortsfesten Struktur (17), welche eine Befehlseinheit (19) mit einem drahtlosen Empfänger aufweist, wobei ein Motor (18) beim Empfang eines Sicherheitssignals in Betrieb gesetzt wird, **dadurch gekennzeichnet, dass** die Anlage einen Funkfühler (20) nach einem der Ansprüche 1 bis 3 aufweist, welcher auf der beweglichen Struktur angebracht ist.

5. Haustechnische Anlage (10), mit einer mobilen Struktur (11, 13, 14) und einer ortsfesten Struktur (17), welche eine Befehlseinheit (19) mit einem drahtlosen Empfänger aufweist, wobei ein Motor (18) beim Empfang eines gültigen Sicherheitssignals in Betrieb gesetzt wird, **dadurch gekennzeichnet, dass** die Anlage einen Funkfühler (20) nach einem der Ansprüche 1 bis 3 aufweist, welcher auf der beweglichen Struktur angebracht ist.

6. Haustechnische Anlage nach Anspruch 4 oder 5, **dadurch gekennzeichnet, dass** die mobile Struktur einen motorbetriebenen Rollvorhang, einen motorbetriebenen Rolladen oder eine motorbetriebene Tür aufweist.

7. Verfahren zum Betrieb eines Funkfühlers nach einem der Ansprüche 1 bis 3, **dadurch gekennzeichnet, dass** es einen Schritt aufweist, bei dem der mechanische Zustand des Gehäuses überwacht wird, wobei der Funkfühler je nach dem mechanischen Zustand des Gehäuses einen Betriebszustand oder einen Sperrzustand einnimmt.

8. Betriebsverfahren nach Anspruch 7, **dadurch gekennzeichnet, dass** der Funkfühler im Sperrzustand von Zeit zu Zeit ein Anwesenheitssignal absendet.

9. Betriebsverfahren nach einem der Ansprüche 7 und 8, **dadurch gekennzeichnet, dass** der Funkfühler einen Regelungsablauf auslöst, wenn er während einer Zeitdauer im Sperrzustand verblieben ist, die kürzer ist als eine erste vorbestimmte Zeitdauer.

10. Betriebsverfahren nach vorstehendem Anspruch, **dadurch gekennzeichnet, dass** der Regelungsablauf die folgenden Schritte enthält:
- einen Schritt zur manuellen Bewegung der mobilen Struktur,
- einen Schritt zum Messen mit Hilfe des Vibrationsfühlers und
- einen Schritt zum Speichern der Messwerte,
anschliessend
- einen Schritt zur Berechnung mindestens eines Schwellenwertes ausgehend von den gespeicherten Messwerten, und
- einen Schritt zum Speichern des Schwellenwertes.

11. Betriebsverfahren nach vorstehendem Anspruch, **dadurch gekennzeichnet, dass** der Funkfühler nach Beendigung des Regelungsablaufs in den Betriebszustand geschaltet wird.
